# EUROPEAN PATENT APPLICATION

(11) **EP 3 220 290 A1**
(43) Date of publication of application: **20.09.2017**
(21) Application number: 16160564.7
(22) Date of filing: 16.03.2016
(51) Int. Cl.: G06F 17/30

(54) **PROCESSING OF TABULAR DATA**

(71) Applicant: Expertmaker AB, 211 25 Malmö (SE)
(72) Inventor: BERKEMAN, Anders, 226 49 LUND (SE); DROUGGE, Carl, 216 19 MALMÖ (SE); HÖRBERG, Sofia, 214 27 MALMÖ (SE)
(74) Representative: Awapatent AB

(57) **Abstract**

A method is provided for processing a set of tabular data values on a computing device, wherein the tabular data values are stored in a main file as a number of rows and a number of columns. The method includes importing a tabular data value belonging to a row and a column in the main file to a corresponding subfile corresponding to a column and a subfile hash index. A hash function is used to map the row to one of a number of subfile hash indices based on the tabular data values of the row, and the method further includes building a data model by reading tabular data values from at least one subfile corresponding to at least one column in the main file. A device and a computer program product are also provided.

## Description

### Technical field

The present disclosure relates to the field of data processing on computing devices. In particular, the present disclosure relates to processing of tabular data on a computing device, wherein the tabular data is stored in a file.

### Background

When building data models it may be necessary to process large amounts of data. When the data is collected, the data is often stored and indexed in a database management system (DBMS) such that queries may efficiently be performed on the data. As e.g. human activity on the internet continues to increase, the amount of data available for analysis becomes larger and larger, and rising challenges exists both in data collection, analysis, sharing, storage and querying and e.g. visualization. In some situations, data is not found already loaded into a DBMS (e.g. in a relational database system such as MySQL or Microsoft SQL Server, or in more "big data"-friendly alternative such as NoSQL and/or Hadoop). Data may instead be found as tabular data created e.g. directly from a logging device, or as an export dump from one of the mentioned database systems or their alternatives. With such tabular data files also becoming larger and larger, alternatives to traditional DBMS-based processing when building data models are required.

### Summary

An object of the present disclosure is therefore to at least partially fulfill the requirements specified above.

Within a first aspect, a method for processing a set of tabular data values on a computing device is provided. The tabular data values are stored in a main file as a number of rows and a number of columns. The method includes importing a tabular data value that belongs to a row and a column in the main file to a corresponding subfile. The tabular data value may be indexed by a row index and a column index, where the row and column indices belong to the closed intervals of one to the number of rows/columns in the main file respectively. The subfile may be indexed by the column index and a subfile hash index. The subfile hash index may be given by a hash function that maps the row with the row index to one of a number of hash indices based on at least one of the tabular data values of the row. Preferably, the number of hash indices is equal to or larger than one.

With "indexed by", it may here mean that the subfile is named in accordance with the subfile hash index and the column index. As an example, if the subfile hash index is "8A" and the column index is "3", the subfile may be named "8A_3.dat" (or similar). As an alternative, the naming convention may refer to a column not by an integer index but by a column name (if such a name exists, such as e.g. "Index", "Count", "City", "Address", etc.). As an example, if the column with column index "3" is named "Address", the subfile may be named e.g. "8A_Address.dat" (or similar) if a mapping between column indices and column names exists. It may also be envisaged that only column names are used, or that other naming conventions are used, as long as a mapping between hash indices, columns and subfiles may be established.

The method may further include building a data model by reading tabular data values from at least one subfile that corresponds to at least one column in the main file.

By "data model", it may here be envisaged any calculation or analysis of which the outcome is based on one or more of the tabular data values originally found in the main file. As an example, building a data model may include performing a statistical calculation in which e.g. a mean, median or other statistical quantity is estimated. A data model may also involve finding relationships between different variables. If the tabular data represents e.g. browsing behaviors for users of a social media website, building a data model may include inferring who is acquainted based on said behaviors. If the tabular data represents buying statistics of customers of a commercial website, building a data model may include inferring e.g. what other products a customer may be interested in based on the behavior of other customers. Many other examples of data models are also envisaged, such as e.g. models used for statistics, machine learning, data mining and others.

A main file including the tabular data values to be processed may e.g. be output from an existing database management system (DBMS), by a computer program or by other means for producing data output. The format of the main file may for example be comma-separated values (CSV), in which each record (line) of data includes one or more fields (columns) separated by a predefined character such as a comma (or tab, semicolon, or similar). Other similar formats for storing tabular data may also be envisaged, even formats not storing data as plain text (e.g. binary formats) as long as the corresponding tabular data values may be arranged into their corresponding rows and columns. The main file may also include other info, such as meta-data and/or name of the columns and similar. When referring herein to "tabular data values", it is herein assumed that such meta-data and/or column names etc. are not to be included.

When using the contents of such a main file to build one or more data models, the present disclosure may offer an improvement compared to using a traditional DBMS or the like, especially if the number of tabular data values in the main file is large (e.g. corresponding to at least several thousands, millions or even billions of rows). Firstly, not requiring access to a DBMS may allow the method of the present invention to be practiced at more locations/computers, and with a reduced cost (in terms of e.g. licenses that would otherwise need to be purchased from the providers of DBMSs). Secondly, if using a traditional DBMS, building one or more data models based on the tabular data found in the main file would likely require all tabular data to first be imported (or re-imported, if the main file containing the tabular data was once exported from a DBMS) into the DBMS, indexed and only then available for e.g. querying. Such a strategy may be time consuming, and the size required to store the final database (including e.g. indexing tables and the like) may greatly exceed the size of the tabular data itself. Other options, like e.g. the use of a MapReduce-algorithm may offer similar challenges and/or additional complexity.

A query (i.e. a calculation or analysis performed on all or at least parts of the tabular data) may require knowledge only about e.g. a few of all the available columns (and/or rows). By importing tabular data values into separate subfiles, the method of the present disclosure may also offer a reduction of required bandwidth as only the necessary subfiles (corresponding to certain columns, and/or rows) may be used and streamed between e.g. a hard drive on which they are stored and a computing core on/by which the query is performed when building the data model. Examples of such situations will be given in the detailed description of the present disclosure.

The hash function used to map a certain row to a certain subfile hash index may be any function that maps data of arbitrary size to a fixed size in a predictive way (i.e. such that the same input is always mapped to the same hash value). The hash function may use only the tabular data value of one certain column, or it may use tabular data values from multiple columns, in order to calculate the corresponding subfile hash index. The subfile hash index may be an integer number, a string, or any other alternative as long as the above requirements are fulfilled. Preferably, the subfile hash is as simple as possible, e.g. an integer. A hash function may, for example, calculate the sum of all entries in a row and output the subfile hash index as the last digit of this sum (i.e. the sum taken modulo 10). Such a hash function would map all rows to one of ten (0-9) integer subfile hash indices. Other alternatives may involve calculating checksums (e.g. by using a Luhn algorithm), or other possible hash functions.

With "hash function", it is also envisaged any function which partitions data based on e.g. range or category, or similar. For example, a hash function may determine that any row in which the tabular data value in the first column is between 0 and 999 is to be mapped to the subfile hash index "1 ", that any row in which value is between 1000 and 1999 is to be mapped to the subfile hash index "2", and that any row with any other value is to be mapped to the subfile hash index "3". Such a hash function partitions data based on "range", and allows for any row containing any integer value in its first column to be mapped to one of three possible subfile hash indices. A hash function hashing on "category" may instead determine that all values starting with the letter "A" are to be mapped to subfile hash index "1", all letters starting with "B" are to be mapped to subfile hash index "2", and so on. A hash function preferably manages to assign subfile hash indices to rows such that an approximately equal number of rows are assigned to each subfile hash index.

Preferably, in one or more embodiments, the number of possible hash indices is less than the total number of rows in the main file.

If it is known in advance that only a limited set of all columns in the main file are to be used when building the data model, the method according to the present disclosure may skip importing tabular data values which do not belong to this limited set of columns. This may speed up both processing time, bandwidth requirement and the amount of storage needed. If it is not known in advance which columns are to be used when building the data model, then preferably tabular data values are not skipped based on them belonging to a certain column or not. Likewise, it may be known in advance that only some of the rows in the main file will be needed for the data model and other rows may then be skipped. If all rows are required, or if it is not known in advance which rows are required or not, then preferably tabular data values are not skipped based on the belonging to a certain row or not.

In one or more embodiments, at least one tabular data value from each row in the main file is imported to a corresponding subfile and the data model is built by reading from all of these corresponding subfiles. In one or more embodiments, the full set of tabular data values is used, i.e. all tabular data values from each row are imported to a corresponding subfile. In some embodiments, it may be preferable to read through all rows and only import tabular data values from one or a few columns. In other embodiments, it may be preferable to import tabular data values from all rows and from several columns. If tabular data values are imported from several columns, some embodiments may include using multiple hash functions such that multiple data models may be created for different columns. As an example, one data model may focus on the first two columns, and use a hash function which hashes based on these columns. Another data model may focus on a third column, and use another hash function which hashes based on this column. The different data models may be built independently of each other, or joint data models made be built based on the result of such different models.

In one or more embodiments, the computing device may include at least a first and a second computing core. The method may include reading from a subfile that corresponds to a first subfile hash index only on the first computing core. The method may further include reading from a subfile that corresponds to a second subfile hash index, different from the first subfile hash index, only on the second computing core. With "computing core", it is here envisaged a physical or logical core on the computing device, such as central processing unit (CPU), a physical core within such a CPU, or a logical core in which a same, single, physical CPU (or core) is made to act like if it consisted of several physical CPUs or cores. Preferably, a computing core is defined such that it has its own bus connected to a memory and that it does not have to share this bus with other computing cores. It may, however, also be envisaged that such a memory bus is shared between computing cores.

In some embodiments, especially when different hash functions are used and several data models are built simultaneously, subfiles corresponding to some columns used by one type of data model may be read from and processed by one or many cores, while subfiles corresponding to columns used by another type of data model may be read from and processed by either the same one or many cores, or preferably by other cores.

A "computing device" may be a single computer, or be comprised of multiple computers distributed on a network (such as e.g. a cloud service). If both multiple computing cores (processing units, processors etc.) and multiple computers are present, the computing cores may be evenly or unevenly distributed among the computers.

By reading from a subfile only on one computing core, the process of building the data model may be made parallell and the speed improved. As all tabular data that is imported to one subfile originates from the same column, and from rows that has been hashed to the same subfile hash index, each computing core may continously and without interruption read and operate on its respective data until at least the processing of the subfile may be completed. Each computing core may build its own submodel that may at a later stage be merged into a single data model, or kept as a separate data model.

By adjusting the hashing function accordingly, rows that contain tabular data which is somehow "linked to each other" may be hashed to the same subfile hash index and therefore handled by the same computing core. Data found in one subfile (or in subfiles corresponding to the same subfile hash index) may therefore be independent from other data, and the computing core reading and operating on data in the subfile may do so without knowledge or dependence on data read from other subfiles by other computing cores. The computing cores may, if needed, even rearrange e.g. the order of rows found in a subfile since the same computing core will be responsible for all subfiles having a particular subfile hash index.

The method according to the present disclosure takes advantage of the fact that processors no longer appear to become much faster for each generation, but instead appear to contain more and more computing cores. The method may allow for enhanced parallellism and a speed-up of the processing time that is required, as the requirement for sharing of data between different computing cores may be reduced. In the above example, the computing device includes two computing cores. It may of course be envisaged that more than two computing cores are included, and that the method is performed utilizing all or many of these computing cores. As an example, if a number of computing cores are available, the hashing function may be adjusted such that the number of possible subfile hash indices matches the number of available computing cores. It may also be envisaged that the number of possible subfile hash indices is larger or smaller than the available number of computing cores. In the former case, one computing core may be responsible for subfiles corresponding to more than one subfile hash index. In the latter case, computing cores not utilized for the processing of the tabular data may be used for other things, such as driving a user interface or similar.

In case one or more global parameters must be shared between computing cores, or if the hash function may not be adopted such that subfiles corresponding to different subfile hash indices contains data that "depends on each other", such sharing of data may be handled by the computing device. For example, if a global parameter is needed, the value of such a parameter may be extracted before building the data model, in a separate data processing step, and then provided to each one of the computing cores to be used when processing the chunk of the data handled by that computing core. Likewise, if the building of a submodel of a first computing core requires information from a second computing core, the processing in the first computing core may be halted until the information required is available from the second computing core. As another example, a final processing step may be required that collects data from the submodels of all other computing cores. Such a final processing step may then be started (e.g. on a computing core) in the end, and perform the final processing step before the final data model may be completed. Similar interruptions of parallell processing may occur and be dealth with during other stages of the processing of the tabular data in the main file.

In one or more embodiments, the tabular data may be compressed when imported from the main file. In other embodiments, tabular data of a subfile may be compressed after the tabular data values are imported from the main file. The subfiles may be compressed once created (or updated) and saved to e.g. a harddrive or other (volatile or non-volatile) memory.

By compressing the data, the required bandwidth needed to transfer data between a hard drive and a computational core may be reduced. If the time needed to transfer uncompressed data is less than the time required to transfer compressed data and decompressing the data on the computing core, the total time needed may be reduced.

As tabular data values belonging to the same column in the main file are often of the same type (e.g. integers, decimals, strings, dates, currency values, etc.), efficient compression may be achieved also if each subfile is compressed separately. Instead of compressing a full row (which may contain data of different types), a subfile may be more efficiently compressed since its data often is of the same or few types. If the data in a subfile at least contains reoccuring patterns, it may be envisaged that entropy coding may be advantageously used to compress the size of the data and to reduce the required bandwidth.

Within a second aspect, a computing device configured to process a set of tabular data values stored in a main file is provided. As above, the tabular data values may be stored in the main file as a number of rows and a number of columns, and the device may be configured to read a tabular data value from the main file, where the tabular data value belongs to a row with a row index and a column with a column index in the main file. The device may further be configured to map, using a hash function (e.g. a hash function as described above), the row with the row index to a subfile hash index that is selected from a number of hash indices based on at least one of the tabular data values of the row. The device may further be configured to import the read tabular data value to a subfile that corresponds to the column with the column index and the subfile hash index. The device may be configured to build a data model by reading tabular data values from at least one subfile that corresponds to at least one column in the main file.

With a third aspect, a computer program product is provided. The computer program product includes a computer-readble storage medium with instructions that are adapted to carry out the method in accordance with the above first aspect, or any embodiments relating thereto, when executed by a device having processing capability.

The second and third aspects may be embodied correspondingly to the first aspect, and the advantages mentioned in the definition of the first aspect are equally applicable to the second aspect and the third aspect. It is noted that the present disclosure relates to all combinations of features, even if herein recited in mutually different claims or embodiments.

As the inventors have realized, the method according to the present disclosure may offer a simple, fast and effective way of processing large and very large files of tabular data. The method does not rely on having access to a traditional DBMS or similar, and does not require for the tabular data to first be imported into such a DBMS and then indexed. Instead, by just importing the necessary tabular data into a plurality of subfiles (i.e. ordinary computer files that are stored on the computing device), efficient processing of the file may be performed by using a mapping function which maps certain rows to certain subfiles and which enables e.g. a computing system with multiple cores to process the tabular data in a parallell fashion. By, on a computing core, processing the tabular data "one row at a time", the computing core may access only the subfiles corresponding to columns that are needed in order to build the data model. Two values that are found on the same row in different subfiles corresponding to the same subfile hash index may be assumed to belong together, without requiring any additional logic or instructions for the computing core to figure this out.

### Brief description of the drawings

The present disclosure will now be described more fully with reference to the accompanying drawings, on which:
Figure 1 illustrates example of tabular data values stored in a main file;
Figure 2 illlustrates example contents of subfiles created using a method according to the present disclosure;
Figure 3a illustrates a flowchart of a method according to the present disclosure; and
Figure 3b illustrates parts of a modified flowchart of a method according to the present disclosure.

Unless explicitly stated to the contrary, the drawings show only such elements and steps that are necessary to illustrate the example embodiment, while other elements, in the interest of clarity, may be omitted or merely suggested.

### Detailed description

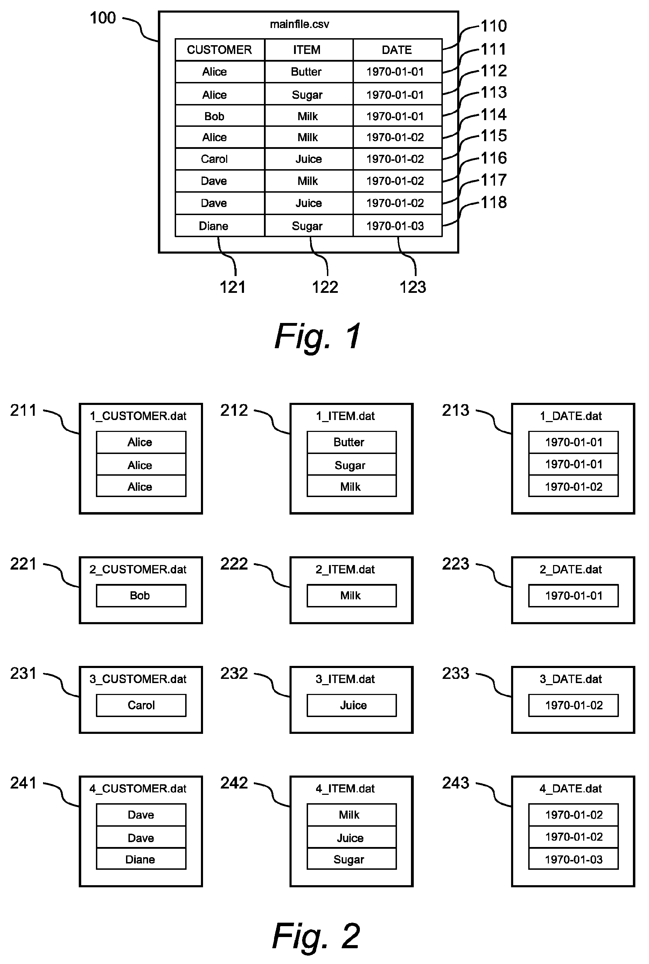

An example of a set of tabular data values stored in a main file 100 ("mainfile.csv") is illustrated in figure 1. In figure 1, the tabular data values are stored as eight rows 111-118 and three columns 121-123. Shown is also an additional row 110 where the data values indicate the column names "CUSTOMER", "ITEM" and "DATE". The data in the main file 100 represents a log file of receipts as printed by a register in a shop, and indicates which customer bought which item on which date. Written as plain text, the contents of the file 100 ("mainfile.csv") would read (using semicolon as the delimiting character):
"CUSTOMER"; "ITEM"; "DATE"
"Alice"; "Butter"; "1970-01-01"
"Alice"; "Sugar"; "1970-01-01"
"Bob"; "Milk"; "1970-01-01"
"Alice"; "Milk"; "1970-01-02"
"Carol"; "Juice"; "1970-01-02"
"Dave"; "Milk"; "1970-01-02"
"Dave"; "Juice"; "1970-01-02"
"Diane"; "Sugar"; "1970-01-03"

In the file 100 as written out in plain text above, the first line indicates the name of the columns and is not to be considered part of the tabular data. In total, there are six receipts/purchases listed in the file: 1) Alice buys butter and sugar on January 1^{st}, 2) Bob buys milk on January 1^{st}, 3) Alice buys milk on January 2^{nd} , 4) Carol buys juice on January 2^{nd} , 5) Dave buys milk and juice on January 2^{nd}, and 6) Diane buys sugar on January 3^{rd}.

In order to group purchases made by the same customer together, a hashing function is selected that maps all data rows having the same customer to the same subfile hash index. A suitable hash function for such a task may be a function which partitions data based on category. Here, the hash function may be chosen such that e.g. the first letter in the first column 121 (CUSTOMER) decides in what group a row will end up (i.e. what subfile hash index the row will be mapped to), and customers starting with the letter "A" will be mapped to subfile hash index "1 ", customers starting with the letter "B" will be mapped to subfile hash index "2", and so on.

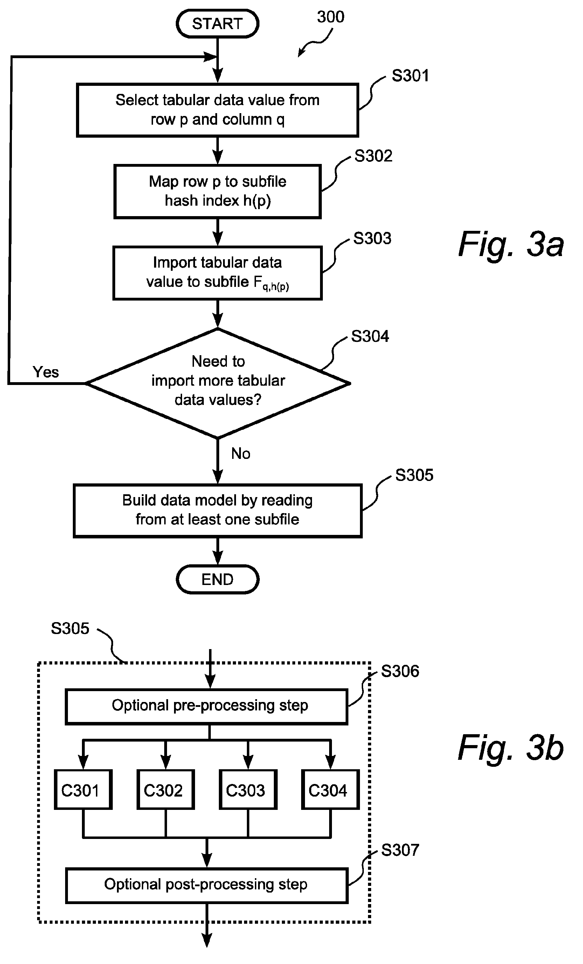

To process the tabular data, a method according to the present disclosure may follow the steps outlined in the flowchart 300 in figure 3a. A tabular data value belonging to a row p and a column q is selected (step S301) from the main file 100. As an example, the row may be the first row 111 (p = 1) and the column may be the first column 121 (q = 1). The first row 111 is mapped to subfile hash index "1" (step S302). The tabular data value found in row 111 and column 121 ("Alice") is imported (step S303) into a subfile named "1_CUSTOMER.dat". If it is decided that more tabular data values should be imported (S304), the process may be repeated. In this example, it is decided that the tabular data value found in row 111 and column 122 ("Butter", q = 2) should be imported into a subfile named "1_ITEM.dat" and that the tabular data value found in row 111 and column 123 ("1970-01-01", q = 3) should be imported into a subfile named "1_DATE.dat".

Next, the second row 112 (p = 2) may be processed in a similar way. Since the value of the tabular data in the first column 121 (q = 1) is still "Alice", the second row 112 will still be mapped to subfile hash index "1" (i.e., the values in row 112 will be imported to the same files as the values in row 111). For the third row 113, where the value of the tabular data in the first column 121 is "Bob" and starts with a "B", the row 113 will be mapped to subfile hash index "2" instead. The values of the row 113 will thus be imported into subfiles with names starting with "2_" instead. The previous steps (steps S301-S304) may be repeated until all rows 111-118 have been imported into respective subfiles. There will be a total of twelve subfiles (originating from there being four different subfile hash indices and three columns). The contents of the different subfiles are illustrated in figure 2.

In figure 2, it may be seen that the subfiles 211-213 belonging to the first subfile hash index "1", the subfiles 221-223 belonging to the second subfile hash index "2", the subfiles 231-233 belonging to the third subfile hash index "3" and the subfiles 241-243 belonging to the fourth subfile hash index "4" do not contain an equal amount of rows. This is a result of the limited example which is illustrated here. For a larger main file, with many more rows of tabular data, the distribution of lines between the different subfiles belonging to different subfile hash indices will be more equal if the hash function is chosen accordingly.

Next, when it is decided that no further tabular data values needs to be imported (step S304), the method may proceed by building a data model based on at least some of the tabular data values found in at least some of the subfiles (step S305). Which subfiles that will be used may vary depending on the type of data model that needs to be built, and on what specific queries that are needed while building the model. As a first example of such a data model, it may be considered how to calculate the total number of items bought by a specific customer. If, for example, said specific customer is "Dave", the hash function will reveal that all purchases related to Dave will be found in subfiles with subfile hash index "4". As a result, only these files need to be considered, and the computing device may build such a model by simply counting the number of rows in the subfile named "4_CUSTOMER.dat" which has the name "Dave" as a value. As another example, if the task was to find the total number of purchases made by any customer starting with the letter "A", the computing device could simply count the full number of rows found in the subfile named "1_ITEMS.dat" (or any other subfile whose name starts with "1_", as all these files should contain the same number of rows). As another example, the task could be to calculate the average amount of items sold to any customer during each date. This may be achieved by reading through all subfiles named "X_DATE.dat" (where X is 1, 2, 3 and 4) and count the number of rows that corresponds to each date. As a slightly more complicated example, the task could be to calculate the average number of items sold per purchase. This may be achieved by reading through each triple of subfiles with names starting with "X_" (where X is 1, 2, 3 and 4), count the number of items per customer per date, and then calculate the average number. This example is slightly more complicated in that it requires reading from subfiles corresponding to several columns.

If the computing device includes more than one computing core (e.g. two computing cores), the mapping of rows to subfile hash indices may be taken advantage of in order to make the processing of the tabular data in the main file more parallel. When building the data model (step S305), the different computing cores may be utilized such that a specific set of subfiles is only read by a specific computing core. An example of such a modified data model building step (step S305) is illustrated in figure 3b, wherein the data model is built using a number of computing cores C301-C304. Using the above example with the log of receipts, the first computing core C301 may be assigned to handle all subfiles corresponding to the first subfile hash index "1", the second computing core C302 may be assigned to handle all subfiles corresponding to the second subfile hash index "4", and so on until all computing cores C301-C304 are assigned their respective set of subfile hash indices. As an example, the example of how to calculate the average number of items sold per purchase could be calculated in parallel by allowing each computing core C301-C304 to individually build a data model in which the respective computing core calculates the number of purchases (that is, the number of different combinations of customers and dates) and the number of items it finds within the subfiles assigned to it. In order to calculate the total average of all purchases, a subsequent post-processing step (step S307) is inserted in which the results from each computing core is gathered and the final result calculated by dividing the total number of items by the total number of purchases. Independent of the total number of rows in the main file, only a total of 8 integers (four integers for the total number of items, and four integers for the total number of purchases) are needed to be shared between/from the different computational cores C301-C304.

Likewise, if needed, a pre-processing step (step S306) may also be inserted if e.g. a global parameter is to be calculated or set and then distributed to each computing core C301-C304 before start of the parallel calculations. An example of such a situation is the task of calculating something relating to a specific date, in which each computing core C301-C304 must first be given information about the date in question. It is envisaged that both of the pre-processing step and the post-processing step (steps S306 and S307) are optional, and not always needed. It is also envisaged that the total number of computing cores available for processing may vary and be either greater than or less than four.

Still further embodiments of the present disclosure will become apparent to a person skilled in the art after studying this description and the drawings. Even though the present description and drawings disclose embodiments and examples, the present disclosure is not restricted to these specific examples. Numerous modifications and variations may be made without departing from the scope of the present disclosure, e.g. by combining different embodiments shown in the description, or by combining parts of one embodiment with parts or the full of another embodiment. Any reference signs appearing in e.g. claims are not to be understood as limiting their scope.

The methods, devices and computer program products disclosed herein may be implemented as software, firmware, hardware or a combination thereof. Although the steps of e.g. a method are, for reasons of clarity, listed sequentially, some or all of the steps may, if suitable, be performed in parallel or in a different order. In a hardware implementation, the division of tasks between functional units referred to in the description does not necessarily correspond to the division into physical units; to the contrary, one physical component may have multiple functionalities, and one task may be carried out by several physical components in cooperation. Certain component or all components may be implemented as software executed by a digital signal processor or microprocessor, or be implemented as hardware or as an application-specific integrated circuit. Such software may be distributed on computer storage media (or non-transitory media) and communication media (or transitory media). As is well known to the person skilled in the art, the term computer storage media includes volatile and non-volatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by a computer. Further, it is well known to the skilled person that communication media typically embodies computer readable instructions, data structures, program modules or other data in a modulated data signal such as a carrier wave or other transport mechanism and includes any information delivery media.

A method, or e.g. a device or computer program product, according to the present disclosure may offer an improvement both with regards to complexity, cost, time-consumption and speed when processing (especially large) tabular data stored in at least one file. An improvement is offered not only in the time it takes from receiving access to such a file until the processing may start (e.g. by not requiring to first loading and indexing the file into e.g. a DBMS), but also in the time required for the actual processing itself. By making use of simple subfiles (stored as ordinary files e.g. on a hard drive or in a volatile or non-volatile memory of a computing device), in combination with one or more hash functions in order to assign workloads (such as reading and processing tabular data values from one or many subfiles) to one or more computing cores, the present disclosure may offer a quicker and easier way of processing a such files with tabular data. The present disclosure, and e.g. the methods offered therein, may adapt well to modern hardware and software architectures, such that the benefits thereof may be taken advantage of. Such benefits may include e.g. the possibility to access multiple files at once from a computing core without overhead, or the way how modern computing systems may move data in blocks of optimized sizes, or cache data read from e.g. a hard drive into faster memory such as RAM or processor cache for faster subsequent access.

## Claims

1. A method for processing a set of tabular data values on a computing device, wherein the tabular data values are stored in a main file as a number M of rows and a number N of columns, the method comprising:
a) importing a tabular data value V_{p,q} belonging to a row p and a column q in the main file to a corresponding subfile F_{q,h(p)}, where p is a row index and 1 ≤ p ≤ M, where q is a column index and 1 ≤ q ≤ N, and where h(p) is a subfile hash index given by a hash function that maps the row with row index p to one of a number L ≥ 1 of hash indices based on at least one of the tabular data values of said row; and
b) building a data model by reading tabular data values from at least one subfile corresponding to at least one column in the main file.

2. The method of claim 1, wherein step a) is repeated until at least one tabular data value from each row in the main file is imported to a corresponding subfile and wherein step b) comprises building the data model by reading from all said corresponding subfiles.

3. The method of claim 1 or 2, wherein the number L of hash indices is smaller than the number M of rows.

4. The method of any one of the preceeding claims, wherein the computing device comprises at least a first and a second computing core and wherein step b) comprises reading from a subfile corresponding to a first subfile hash index only on the first computing core and reading from a subfile corresponding to a second subfile hash index different from the first subfile hash index only on the second computing core.

5. The method of any one of the preceeding claims, wherein step a) further comprises compressing the tabular data of a subfile.

6. The method of claim 5 when depending on claim 2, wherein the tabular data of the subfile is compressed after the tabular data values are imported.

7. A computer program product comprising a computer-readable storage medium with instructions adapted to carry out the method of any one of claims 1-6 when executed by a device having processing capability.

8. A computing device configured to process a set of tabular data values stored in a main file as a number M of rows and a number N of columns, the device being configured to:
a) read, from the main file, a tabular data value V_{p,q} belonging to a row p and a column q in said main file, where p is a row index and 1 ≤ p ≤ M, and where q is a column index and 1 ≤ q ≤ N;
b) map, using a hash function, the row with the row index p to a subfile hash index h(p) selected from a number L ≥ 1 of hash indices based on at least one of the tabular data values of said row;
c) import the read tabular data value to a subfile F_{q,h(p)} corresponding to the column with column index q and the subfile hash index h(p); and
b) build a data model by reading tabular data values from at least one subfile corresponding to at least one column in the main file.

9. The computing device of claim 8, further configured to repeat steps a), b) and c) until at least one tabular data value from each row in the main file is imported to a corresponding subfile, and to build the data model by reading from all said corresponding subfiles.

10. The computing device of claim 8 or 9, further comprising at least a first and a second computing core, and configured to build the data model by reading from a subfile corresponding to a first subfile hash index only on the first computing core and by reading from a subfile corresponding to a second subfile hash index different from the first subfile hash index only on the second computing core.

11. The computing device of any one of claims 8-10, further configured to compress the tabular data of a subfile.

12. The computing device of claim 11, further configured to compress the tabular data of the subfile after the tabular data values are imported.
